(19) **Europäisches Patentamt / European Patent Office / Office européen des brevets**

(11) **EP 4 592 770 A1**

(12) **EUROPEAN PATENT APPLICATION**

(43) Date of publication:
**30.07.2025 Bulletin 2025/31**

(21) Application number: **25150796.8**

(22) Date of filing: **08.01.2025**

(51) International Patent Classification (IPC):
*G05B 13/02* *(2006.01)*

(52) Cooperative Patent Classification (CPC):
**G05B 13/0265**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.01.2024 US 202418414098**

(71) Applicant: HONEYWELL INTERNATIONAL INC.
**Charlotte, NC 28202 (US)**

(72) Inventors:
• **NARAYAN, Anand**
**Charlotte, 28202 (US)**
• **SINHA, Priyanshu**
**Charlotte, 28202 (US)**
• **PRABHU, Rakshitha**
**Charlotte, 28202 (US)**
• **RAVI, Rahul**
**Charlotte, 28202 (US)**

(74) Representative: **Haseltine Lake Kempner LLP**
**Cheapside House**
**138 Cheapside**
**London EC2V 6BJ (GB)**

(54) **METHOD AND SYSTEM FOR ADVANCED WARNING OF TRANSIENT STATES IN AN INDUSTRIAL PROCESS**

(57) A plurality of tags each identify a corresponding process parameter of an industrial process and historical values for the process parameter. A parameter forecast model is trained for each of the parameters that are identified by the plurality of tags, wherein each of the parameter forecast models is trained based at least in part on the received historical values for at least some of the parameters that are identified by the plurality of tags.

A forecasted parameter value is generated for each of the parameters identified by the plurality of tags based at least in part on the corresponding parameter forecast model that corresponds to the respective parameter. A plurality of forecasted steady state periods and a plurality of forecasted transient state periods are predicted for each of one or more of the identified parameters.

FIG. 12

EP 4 592 770 A1

**Description**

TECHNICAL FIELD

The present disclosure relates to industrial processes and more particularly to methods and systems for predicting parameter values, plant states and/or alarms in an industrial process.

BACKGROUND

A wide range of industrial processes are known. Many industrial processes are large, complex processes that can be difficult to monitor and control, in part because an industrial process may involve a large number of different equipment, each of which may generate large volumes of operational data. As an example, in a complex process plant such as a refinery or a petrochemical complex, an operator may be responsible for monitoring thousands of parameters such as pressures, levels, flows, and temperatures. Current automation systems are not able to take all necessary actions when deviations occur, and human interaction is needed. Experienced operators with years of service can often manage an industrial process fairly well by taking appropriately timed control actions when deviations occur. However, some operators may be inexperienced, and may not have the experience in dealing with each possible deviation that may occur. Taking an inappropriate action may cause the deviation to become worse, or may cause deviations in other parameters. What would be desirable are methods and systems for monitoring and controlling industrial processes. What would be desirable are methods and systems for predicting parameter values, plant states and/or alarms in an industrial process to aid an operator in taking appropriately timed actions to properly manage the industrial process.

SUMMARY

The present disclosure relates to industrial processes and more particularly to methods and systems for predicting parameter values, plant states and/or alarms in an industrial process. An example may be found in a method for predicting steady states and transient states of predetermined parameters of an industrial process. In some cases, the predetermined parameters may correspond to predetermined Key Performance Indicators (KPIs), but this is not required. The illustrative method includes identifying a plurality of parameter of the industrial process, receiving historical values for the identified parameters, and training a parameter forecast model for each of the identified parameters, wherein each of the parameter forecast models is trained based at least in part on the received historical values for at least some of the identified parameters. A plurality of forecasted parameter values into the future for each of the identified parameters are predicted based at least in part on the corresponding parameter forecast model that corresponds to the respective parameter. A plurality of forecasted steady state periods and a plurality of forecasted transient state periods are predicted for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period.

Another example may be found in a system for predicting steady states and transient states of predetermined parameters of an industrial process. The system includes an I/O port, a memory, and a controller operatively coupled to the I/O port and the memory. The controller is configured to receive via the I/O port historical values for a plurality of identified parameters and to train a parameter forecast model for each of the identified parameters, wherein each of the parameter forecast models is trained based at least in part on the received historical values for at least some of the identified parameters. The controller is configured to predict a plurality of forecasted parameter values into the future for each of the identified parameters based at least in part on the corresponding parameter forecast model that corresponds to the respective parameter. The controller is configured to predict a plurality of forecasted steady state periods and a plurality of forecasted transient state periods for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period.

Another example may be found in a non-transitory computer readably medium storing executable instructions. When the executable instructions are executed by one or more processors, the one or more processors are caused to receive historical values for a plurality of identified parameters of an industrial process and to train a parameter forecast model for each of the identified parameters, wherein each of the parameter forecast models is trained based at least in part on the received historical values for at least some of the identified parameters. The one or more processors are caused to predict a plurality of forecasted parameter values into the future for each of the identified parameters based at least in part on the corresponding parameter forecast model that corresponds to the respective parameter. The one or more processors are caused to predict a plurality of forecasted steady state periods and a plurality of forecasted transient state periods for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

Figure 1 is a schematic block diagram of an illustrative system for predicting parameters for an industrial process;

Figure 2 is a flow diagram showing an illustrative method for predicting parameters;

Figure 3 is a flow diagram showing an illustrative method for predicting parameters;

Figure 4 is a flow diagram showing an illustrative method for predicting parameters;

Figures 5A and 5B are flow diagrams that together show an illustrative method for predicting parameters;

Figure 6 is a flow diagram showing an illustrative method of forecasting parameters of an industrial process over a certain extended time window;

Figure 7 is a flow diagram showing an illustrative method of forecasting plant states of an industrial process;

Figure 8 is a flow diagram showing an illustrative method of forecasting alarms of an industrial process;

Figure 9 is a flow diagram showing an illustrative overall process flow;

Figure 10 is a flow diagram showing an illustrative method for predicting steady states and transient states of predetermined parameters;

Figure 11 is a flow diagram showing an illustrative method for detecting steady states and transient states;

Figure 12 is a schematic view of an illustrative data pipeline for detecting steady states and transient states;

Figure 13 is a graphical representation of detected steady states and detected transient states; and

Figure 14 is a graphical representation of detected steady states and detected transient states.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

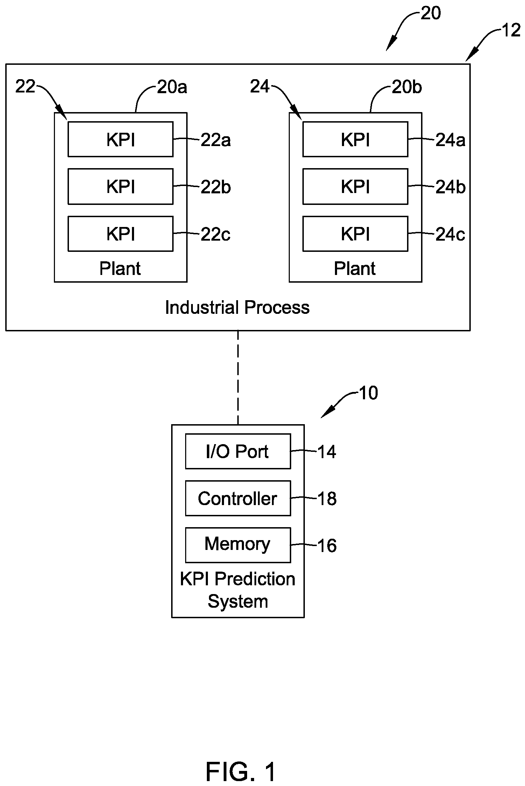

Figure 1 is a schematic block diagram showing an illustrative system 10 for predicting predetermined parameters of an industrial process 12. In some cases, the predetermined parameters may correspond to predetermined Key Performance Indicators (KPIs) of the industrial process 12, but this is not required. The system 10 includes an I/O port 14, a memory 16 and a controller 18 that is operatively coupled to the I/O port 14 and to the memory 16. The industrial process 12 may generically represent any of a variety of different industrial processes. As an example, the industrial process 12 may represent a chemical manufacturing process or an oil refinery process. In some instances, the industrial process 12 may include a number of plants 20, individually labeled as 20a and 20b. While two plants 20 are shown, this is merely illustrative as the industrial process 12 may include only a single plant 20, or may include three or more plants 20. Each of the plants 20 may represent a piece of equipment of the industrial process 12, such as a boiler, a furnace, a distillation tower or the like. In the example shown, each of the plants 20 include a number of parameters (e.g. Key Performance Indicators (KPIs)). As shown, the plant 20a includes a number of KPIs 22, individually labeled as 22a, 22b and 22c, and the plant 20b includes a number of KPIs 24, individually labeled as 24a, 24b and 24c. This is merely illustrative, as the plant 20a may include any number of KPIs 22, and may include substantially more than three KPIs, and the plant 20b may include any number of KPIs 24, and may include substantially more than three KPIs 24.

The controller 18 is configured to receive via the I/O port 14 a plurality of tags that each identify a corresponding parameter (e.g. KPI 22, 24) of the industrial process 12. In some cases, the plurality of tags only tag certain KPIs of the industrial process 12 that are deemed critical to the operation and control of the industrial process 12. The controller 18 is configured to receive via the I/O port 14 historical values for the parameters (e.g. KPIs 22, 24) that are identified by the plurality of tags. The controller 18 is configured to train a parameter forecast model for each of the parameters (e.g. KPIs 22, 24) that are identified by the plurality of tags, wherein each of the parameter forecast models is trained based at least in part on the received historical values for at least some of the parameters (KPIs 22, 24) that are identified by the plurality of tags. Each of the parameter forecast models may be an Artificial Intelligence (AI) based model. In some cases, one or more of the parameter forecast models may be trained continuously using updated current and historical values for at least some of the parameters (e.g. KPIs 22, 24), and thus may continuously learn and track the characteristics of the industrial process. In other cases, one or more of the parameter forecast models may be trained during a training phase, and then the trained model is released for use during an operational phase. In either case, the controller 18 may be configured to generate a forecasted parameter value for each of the parameters (e.g. KPIs 22, 24) identified by the plurality of tags based at least in part on the corresponding parameter forecast model that corresponds to the respective parameter (e.g. KPI 22, 24). In some instances, the controller 18 may be configured to automatically adjust one or more parameters of the industrial process 12 based at least in part on one or more of the forecasted parameter values.

In some instances, each of the parameter forecast models may be trained based at least in part on the received historical values for at least some of the parameters (e.g. KPIs 22, 24) of the industrial process 12 that are identified by the plurality of tags and one or more of the forecasted parameter values. In some instances, when the industrial process 12 includes a plurality of plants 20, and each plant may include two or more tags of the plurality of tags that each identify a corresponding parameter (e.g. KPI 22, 24) of the corresponding plant 20, and each plant 20 may have two or more predetermined plant states. The controller 18 may be configured to train a plant state forecast model for each of the plurality of plants 20, wherein each of the plant state forecast models is trained to forecast the plant state of the respective plant 20 based at least in part on the received historical values for the parameters (e.g. KPIs 22, 24) that are associated with the respective plant 20 and/or the forecasted parameter values for the parameters (e.g. KPIs 22, 24) that are associated with the respective plant 20. The controller 18 may be configured to generate a forecasted plant state for at least one of the plurality of plants 20 of the industrial process 12 based at least in part on the plant state forecast model that corresponds to the respective plant 20.

In some instances, the controller 18 may be configured to receive one or more alarm limits for at least some of the parameters (e.g. KPIs 22, 24) of the industrial process 12 and to receive historical alarms and/or events associated with at least some of the parameters (e.g. KPIs 22, 24) of the industrial process 12. The controller 18 may be configured to train an alarm forecast model for one or more of the parameters (e.g. KPIs 22, 24) of the industrial process 12, wherein the alarm forecast model is trained based on the received historical values for one or more of the parameters (e.g. KPIs 22, 24) and/or one or more of the forecasted parameter values, the historical alarms and/or events associated with at least some of the parameters (e.g. KPIs 22, 24), and one or more of the alarm limits for at least some of the parameters (e.g. KPIs 22, 24).

In some instances, the controller 18 may be configured to receive via the I/O port 14 the historical values for a plurality of identified parameters (e.g. KPIs 22, 24) and to train a parameter forecast model for each of the identified parameters (e.g. KPIs 22, 24), wherein each of the parameter forecast models is trained based at least in part on the received historical values for at least some of the identified parameters (e.g. KPIs 22, 24), and in some cases on one or more of the forecasted parameter values. The controller 18 may be configured to predict a plurality of forecasted parameter values into the future for each of the identified parameters based at least in part on the corresponding parameter forecast model that corresponds to the respective parameter (e.g. KPIs 22, 24). In some instances, the controller 18 may be configured to predict a plurality of forecasted steady state periods and a plurality of forecasted transient state periods for each of one or more of the identified parameters (e.g. KPIs 22, 24) based at least in part on the forecasted parameter values of the respective parameters (e.g. KPIs 22, 24), wherein each of the plurality of forecasted transient state periods corresponds to a period of time when the respective forecasted parameter value is predicted to transition from one forecasted steady state period to another forecasted steady state period.

In some cases, when predicting the plurality of forecasted steady state periods and the plurality of forecasted transient state periods for each of one or more of the identified parameters (e.g. KPIs 22, 24), the controller 18 may be configured to filter each of the forecasted parameter values of the one or more identified parameters, resulting in respective filtered forecasted parameter values and to predict the plurality of forecasted steady state periods and the plurality of forecasted transient state periods for each of one or more of the identified parameters (e.g. KPIs 22, 24) based at least in part on the filtered forecasted parameter values of the respective parameters (e.g. KPIs 22, 24). In some instances, when filtering each of the forecasted parameter values of the one or more identified parameters (e.g. KPIs 22, 24), the controller 18 may be configured to apply two or more of a significance filter to each of the forecasted parameter values of the one or more identified parameters (e.g. KPIs 22, 24), a linear regression filter to each of the forecasted parameter values of the one or more identified parameters (e.g. KPIs 22, 24), a gaussian estimator to each of the forecasted parameter values of the one or more identified parameters (e.g. KPIs 22, 24), and a peak threshold filter to each of the forecasted parameter values of the one or more identified parameters (e.g. KPIs 22, 24).

In some instances, when one or more of the forecasted transient state periods is unplanned or undesirable, the controller 18 may be configured to automatically adjust one or more parameters of the industrial process 12 to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods. In some cases, the controller 18 may be configured to output a recommendation for adjusting one or more parameters of the industrial process 12 to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods. A forecasted transient state period may be determined to be unplanned or undesirable when no transient plant state is expected or planned, such as when the industrial process is expected to be in a steady plant state. A transient state period occurs when the process is transitioning from one planned steady state to another planned steady state. In some cases, a forecasted transient state period may be determined to be unplanned or undesirable when the forecasted transient state has a duration that is longer than a threshold duration. In some cases, a forecasted transient state period may be determined to be unplanned or undesirable when the forecasted transient state has a control error in one or more process parameters that is greater than a threshold control error. These are just some examples.

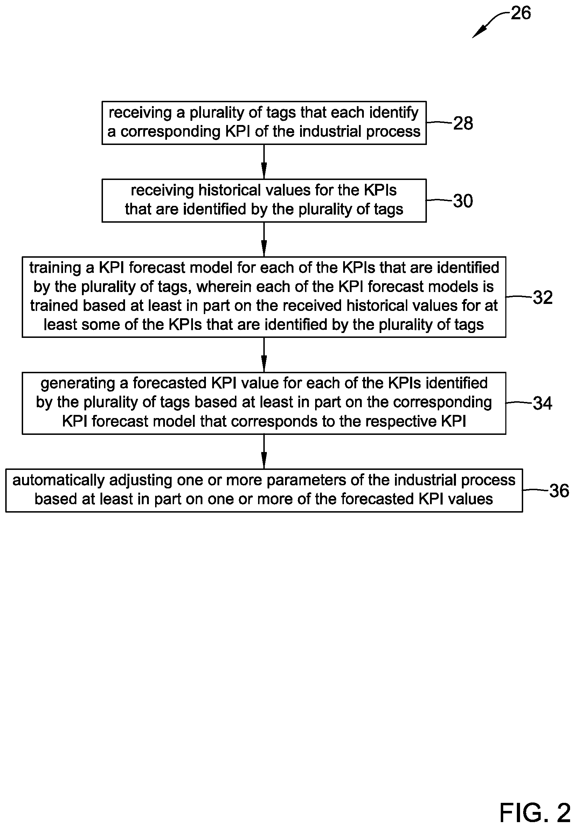

Figure 2 is a flow diagram showing an illustrative method 26 for predicting predetermined parameters of an industrial process (such as the industrial process 12). In some cases, the predetermined parameters may correspond to predetermined Key Performance Indicators (KPIs), but this is not required. The illustrative method 26 includes receiving a plurality of tags that each identify a corresponding parameter (e.g. KPI) of the industrial process, as indicated at block 28. In some cases, the plurality of tags only tag certain parameters of the industrial process 12 that are deemed critical to the operation and control of the industrial process 12 (e.g. KPIs). Historical values for the parameters that are identified by the plurality of tags are received, as indicated at block 30. A parameter forecast model is trained for each of the parameters that are identified by the plurality of tags, wherein each of the parameter forecast models is trained based at least in part on the received historical values for at least some of the parameters that are identified by the plurality of tags, as indicated at block 32. Each of the parameter forecast models may be an Artificial Intelligence (AI) based model. In some cases, one or more of the parameter forecast models may be trained continuously using updated current and historical values for at least some of the parameters, and thus may continuously learn and track the characteristics of the industrial process. In other cases, one or more of the parameter forecast models may be trained during a training phase, and then the trained model is released for use during an operational phase. In either case, a forecasted parameter value is generated for each of the parameters (e.g. KPIs) identified by the plurality of tags based at least in part on the corresponding parameter forecast model that corresponds to the respective parameter, as indicated at block 34. In some instances, the method 26 may include automatically adjusting one or more parameters of the industrial process based at least in part on one or more of the forecasted parameter values, as indicated at block 36.

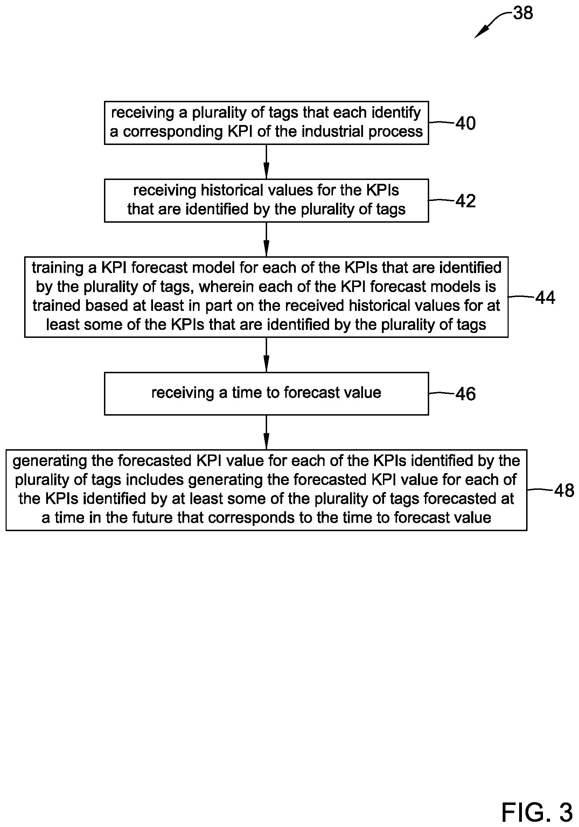

Figure 3 is a flow diagram showing an illustrative method 38 for predicting predetermined parameters of an industrial process (such as the industrial process 12). In some cases, the predetermined parameters may correspond to predetermined Key Performance Indicators (KPIs), but this is not required. The illustrative method 38 includes receiving a plurality of tags that each identify a corresponding parameter (e.g. KPI) of the industrial process, as indicated at block 40. In some cases, the plurality of tags only tag certain parameters (e.g. KPIs) of the industrial process that are deemed critical to the operation and control of the industrial process. Historical values for the parameters (e.g. KPIs) that are identified by the plurality of tags are received, as indicated at block 42. A parameter forecast model is trained for each of the parameters (e.g. KPIs) that are identified by the plurality of tags, wherein each of the parameter forecast models is trained based at least in part on the received historical values for at least some of the parameters that are identified by the plurality of tags, as indicated at block 44. Each of the parameter forecast models may be an Artificial Intelligence (AI) based model. In some cases, one or more of the parameter forecast models may be trained continuously using updated current and historical values for at least some of the parameters, and thus may continuously learn and track the characteristics of the industrial process. In other cases, one or more of the parameter forecast models may be trained during a training phase, and then the trained model is released for use during an operational phase. In either case, and in the example shown, a time to forecast value is received, as indicated at block 46. The time to forecast represents a target time into the future to forecast the forecasted parameter values. A forecasted parameter value is generated for each of the parameters (e.g. KPIs) identified by the plurality of tags to correspond to a time in the future that corresponds to the time to forecast value, as indicated at block 48. In some instances, each of the parameter forecast models may be trained based at least in part on the received historical values for at least some of the parameters of the industrial process that are identified by the plurality of tags and one or more of the forecasted parameter values.

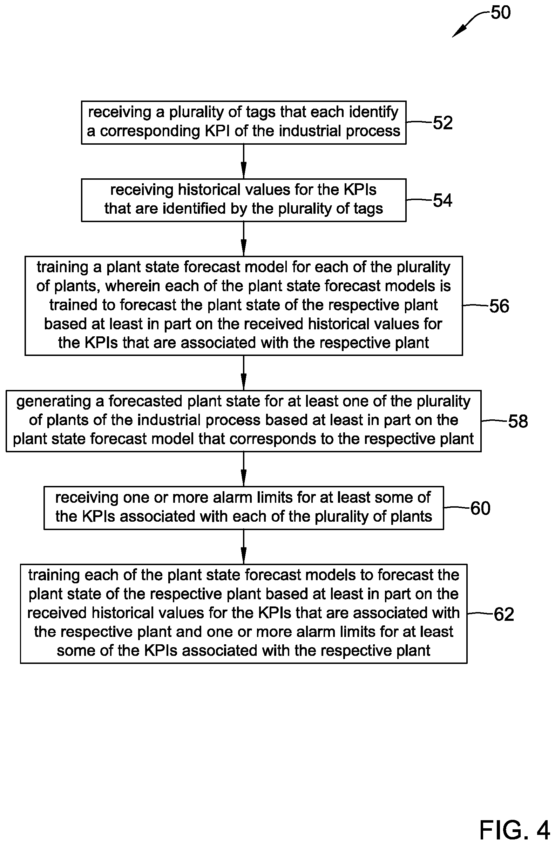

Figure 4 is a flow diagram showing an illustrative method 50 for predicting predetermined parameters of an industrial process (such as the industrial process 12). In some cases, the predetermined parameters may correspond to predetermined Key Performance Indicators (KPIs), but this is not required. The illustrative method 50 includes receiving a plurality of tags that each identify a corresponding parameter (e.g. KPI) of the industrial process, as indicated at block 52. In some cases, the plurality of tags only tag certain parameters of the industrial process that are deemed critical to the operation and control of the industrial process (e.g. KPIs). Historical values for the parameters that are identified by the plurality of tags are received, as indicated at block 54. A plant state forecast model is trained for each of the plurality of plants, wherein each of the plant state forecast models is trained to forecast the plant state (e.g. normal, tripped, cold shutdown, hot shutdown) of the respective plant based at least in part on the received historical values for the parameters that are associated with the respective plant and/or the forecasted parameter values for the parameters that are associated with the respective plant, as indicated at block 56. Each of the plant state forecast models may be an Artificial Intelligence (AI) based model. In some cases, one or more of the plant state forecast models may be trained continuously using updated current and historical values for at least some of the parameters associated with the respective plant, and thus may continuously learn and track the characteristics of the respective plant. In other cases, one or more of the plant state forecast models may be trained during a training phase, and then the trained model is released for use during an operational phase. In either case, a forecasted plant state is generated for at least one of the plurality of plants of the industrial process based at least in part on the plant state forecast model that corresponds to the respective plant, as indicated at block 58. In some instances, each of the plant state forecast models may be used to forecast the plant state of the respective plant based at least in part on the received historical values for the parameters that are associated with the respective plant and one or more of the forecasted parameter values for one or more of the parameters that are associated with the respective plant.

In some instances, the method 50 may further include receiving one or more alarm limits for at least some of the parameters (e.g. KPIs) associated with each of the plurality of plants, as indicated at block 60. In some instances, each of the plant state forecast models may be trained to forecast the plant state of the respective plant based at least in part on the received historical values for the parameters that are associated with the respective plant (and/or the forecasted parameters values for the parameters that are associated with the respective plant) and one or more alarm limits for at least some of the parameters associated with the respective plant, as indicated at block 62. In some instances, each of the plant state forecast models may be trained to forecast the plant state of the respective plant based at least in part on the received historical values for the parameters that are associated with the respective plant, one or more alarm limits for at least some of the parameters associated with the respective plant, and one or more of the forecasted parameters values for one or more of the parameters that are associated with the respective plant.

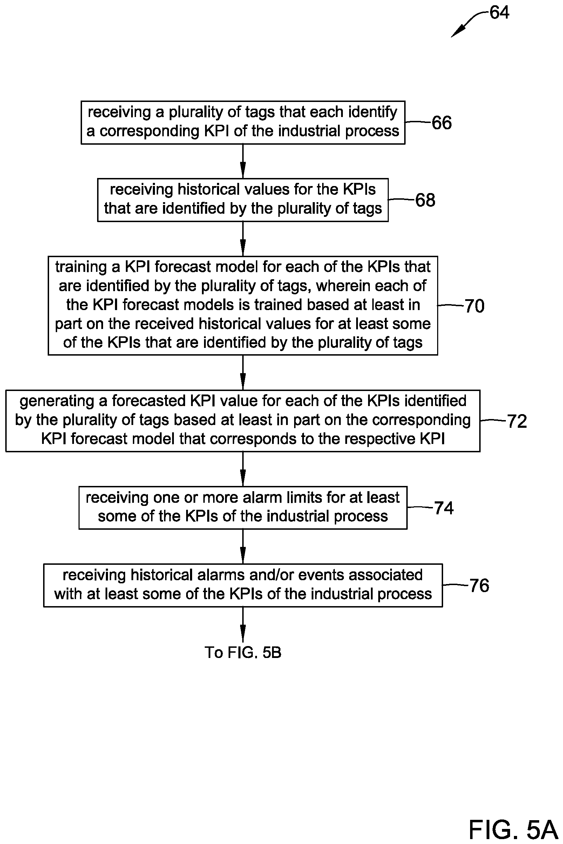

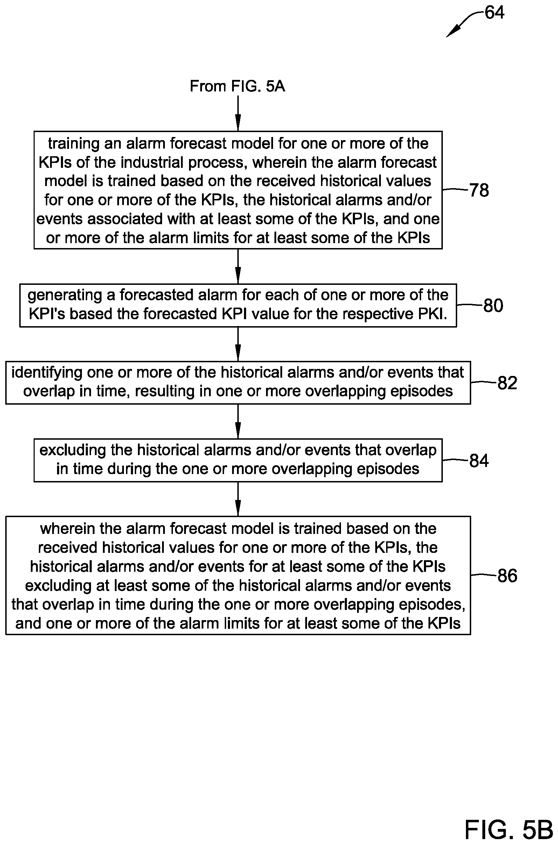

Figures 5A and 5B are flow diagrams that together show an illustrative method 64 for predicting predetermined parameters of an industrial process (such as the industrial process 12). In some cases, the predetermined parameters may correspond to predetermined Key Performance Indicators (KPIs), but this is not required. The illustrative method 64 includes receiving a plurality of tags that each identify a corresponding parameter of the industrial process, as indicated at block 66. In some cases, the plurality of tags only tag certain parameters of the industrial process that are deemed critical to the operation and control of the industrial process (e.g. KPIs). Historical values for the parameters that are identified by the plurality of tags are received, as indicated at block 68. A parameters forecast model is trained for each of the parameters that are identified by the plurality of tags, wherein each of the parameters forecast models is trained based at least in part on the received historical values for at least some of the parameters that are identified by the plurality of tags, as indicated at block at block 70. Each of the parameter forecast models may be an Artificial Intelligence (AI) based model. In some cases, one or more of the parameter forecast models may be trained continuously using updated current and historical values for at least some of the parameters, and thus may continuously learn and track the characteristics of the industrial process. In other cases, one or more of the parameter forecast models may be trained during a training phase, and then the trained model is released for use during an operational phase. In either case, a forecasted parameter value is generated for each of the parameters identified by the plurality of tags based at least in part on the corresponding parameter forecast model that corresponds to the respective parameter, as indicated at block 72.

In some instances, the method 64 may include receiving one or more alarm limits for at least some of the parameters of the industrial process, as indicated at block 74. Historical alarms and/or events associated with at least some of the parameters of the industrial process may be received, as indicated at block 76. Turning to Figure 5B, the method 64 continues with training an alarm forecast model for one or more of the parameters (e.g. KPIs) of the industrial process, wherein the alarm forecast model is trained based on the received historical values for one or more of the parameters (and/or the forecasted parameter values for the parameters that are associated with the respective plant), the historical alarms and/or events associated with at least some of the parameters, and one or more of the alarm limits for at least some of the parameters, as indicated at block 78. In some instances, the alarm forecast model may also trained based on one or more of the forecasted parameters values. In some instances, the method 64 may include generating a forecasted alarm for each of one or more of the parameters based the forecasted parameter value for the respective parameter, as indicated at block 80.

In some instances, the method 64 may include identifying two or more of the historical alarms and/or events that overlap in time, resulting in one or more overlapping episodes, as indicated at block 82. The historical alarms and/or events that overlap in time during the one or more overlapping episodes may be excluded, as indicated at block 84. The alarm forecast model may be trained based on the received historical values for one or more of the parameters and/or the forecasted parameter values for the one or more parameters, the historical alarms and/or events for at least some of the parameters excluding at least some of the historical alarms and/or events that overlap in time during the one or more overlapping episodes, and one or more of the alarm limits for at least some of the parameters, as indicated at block 86. In some instances, each of the historical alarms and/or events associated with at least some of the parameters may identify a source of the historical alarm and/or event, a category of the historical alarm and/or event and a condition of the historical alarm and/or event, and wherein the alarm forecast model may be trained based on the source, the category and/or the condition of one or more of the historical alarm and/or events associated with at least some of the parameters of the industrial process.

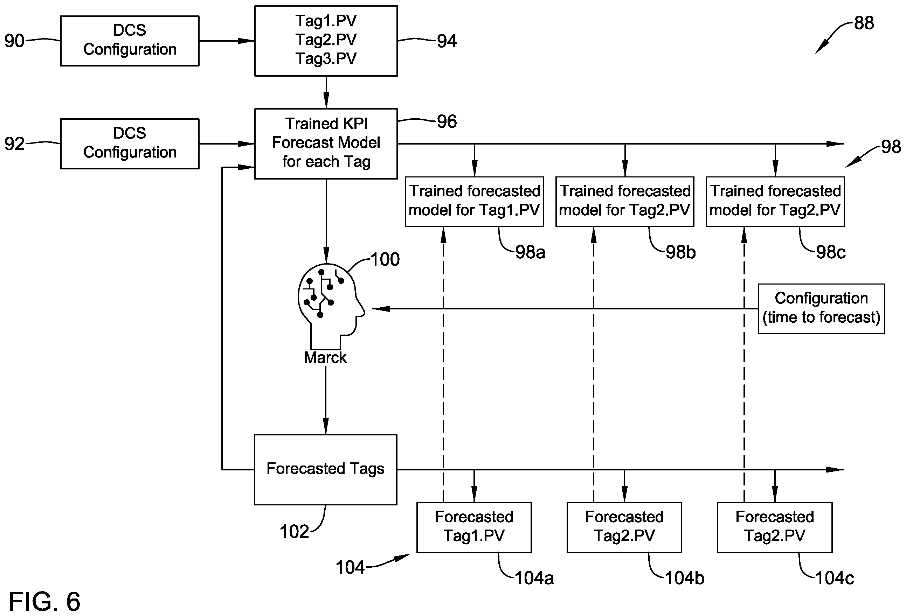

Figure 6 is a flow diagram showing an illustrative workflow 88 for predicting parameters over time. The method 88 includes receiving tags and alarm configurations from a Distributed Control System (DCS) configuration 90 and getting historical parameter (e.g. KPI) values from a historian 92. The tags are seen at block 94. At block 96, the parameter forecast model is trained for each tagged parameter, resulting in a number of trained parameter forecast models 98, individually labeled as 98a, 98b and 98c. In some instances, there may be any number of trained parameter forecast models 98, and in some cases there may be substantially more than three trained parameter forecast models 98. The trained parameter forecast models 98 are provided to MARCK (Multivariate Auto Regressive Combined KPI forecaster) 100, which is a deep learning model that uses machine learning techniques. MARCK 100 outputs forecasted parameter (e.g. KPI) values for each of the tagged parameter, as indicated at block 102, resulting in a number of forecasted parameter values 104, individually labeled as 104a, 104b and 104c. In some cases, the forecasted parameter values 104, along with updated historical parameter values from the historian 92, are used to retrain the trained parameter forecast models 98, sometimes continuously.

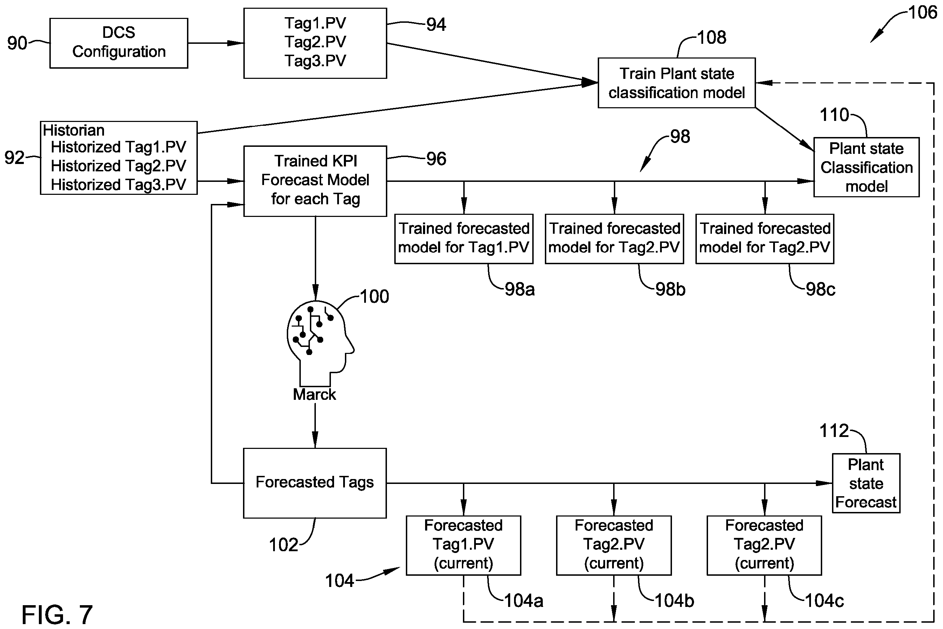

Figure 7 is a flow diagram showing an illustrative workflow 106 that includes many of the same features of Figure 6, but further includes a block 108 that receives an identifier of the tagged parameters (e.g. KPIs) 94 from the DCS configuration 90, and the historical data for the tagged parameters (e.g. KPIs) from the historian 92. The block 108 trains a plant state classification model and outputs a plant state classification model 110 that receives input from the trained parameter forecast models 98 as shown. The forecasted parameter values 104 may be used to forecast the plant state 112 (e.g. normal, tripped, cold shutdown, hot shutdown) using the plant state classification model 110.

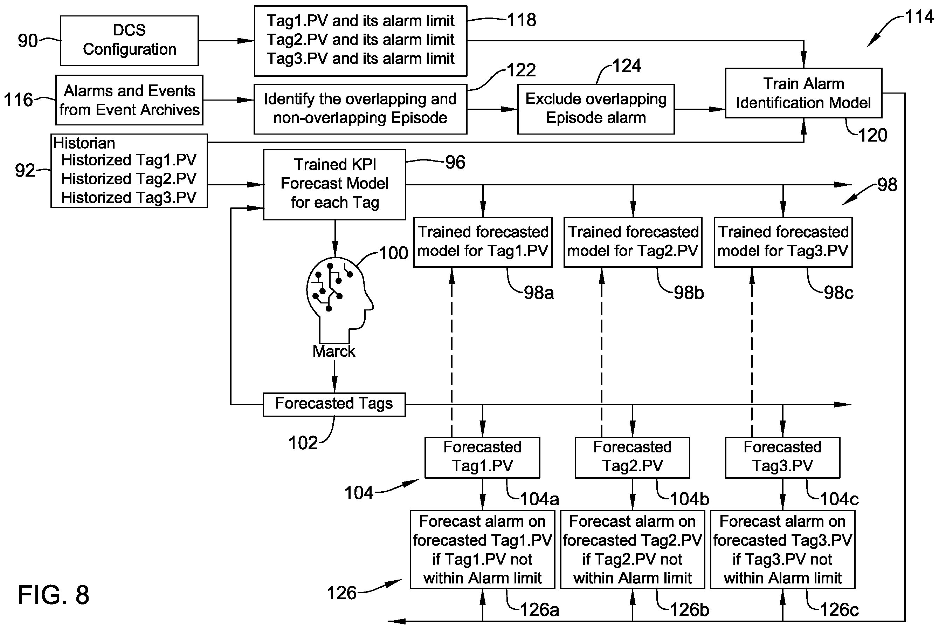

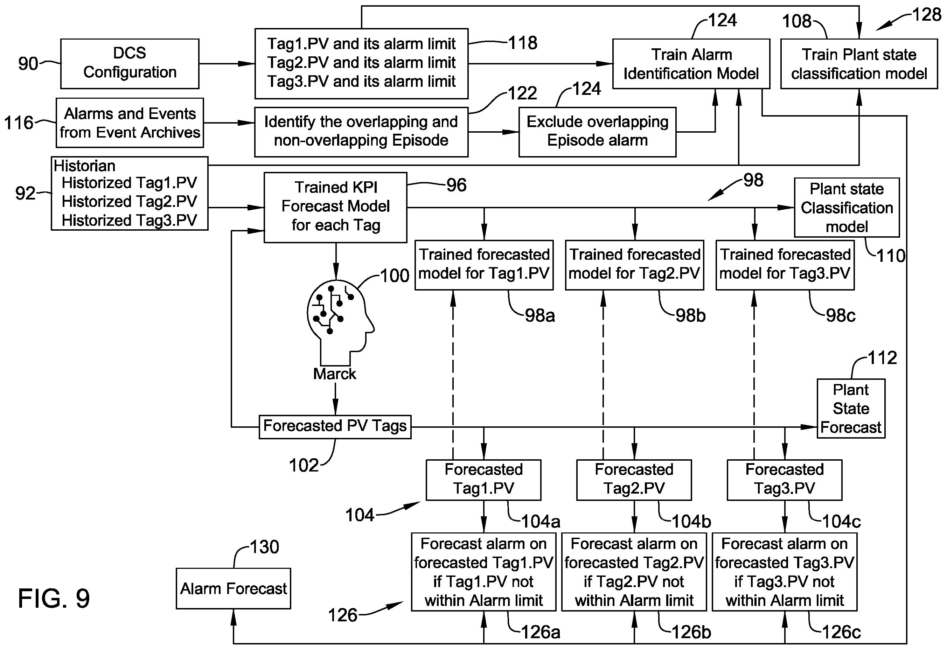

Figure 8 is a flow diagram showing an illustrative workflow 114 that includes many of the same features of Figure 6, but also includes a block 116 that provides historical alarms and events from archives. At a block 118, the tags and alarm limits are associated, and this information is provided to a block 120 where an alarm identification model is trained. The alarms and events from block 116 are provided to a block 122, where overlapping and non-overlapping alarms and events are identified. At block 124, overlapping alarms and events are excluded, and the remaining alarms and events are provided to the block 120. Information from the historian 92 is provided to the block 120, which trains and outputs an alarm identification model 120. Each of the forecasted parameter values 104, individually labeled 104a, 104b and 104c, is provided to a corresponding alarm forecast block 126, individually labeled 126a, 126b and 126c as shown. Each of the alarm forecast blocks 126a, 226b and 126c is configured to forecasts whether a corresponding forecasted parameter value is expected to fall outside of its alarm limit based on the alarm identification model 120 and the corresponding forecasted parameter value 104a, 104b and 104c. Figure 9 is a flow diagram showing an illustrative workflow 128 that represents a compilation of the other workflows. One addition in Figure 9 is a block 130 that outputs the alarm forecasts.

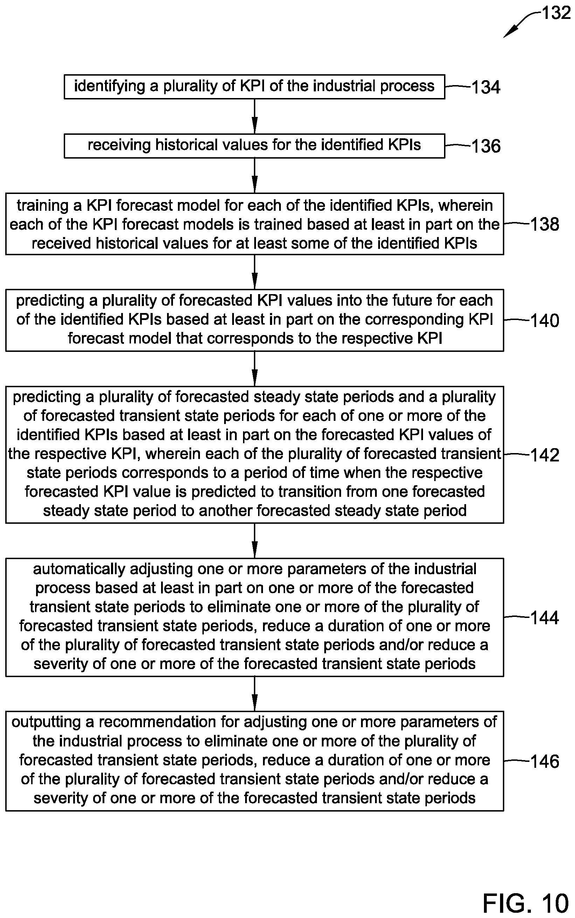

Figure 10 is a flow diagram showing an illustrative method 132 for predicting steady states and transient states of predetermined parameters of an industrial process (such as the industrial process 12). In some cases, the predetermined parameters may correspond to predetermined Key Performance Indicators (KPIs), but this is not required. The illustrative method 132 includes identifying a plurality of parameters of the industrial process, as indicated at block 134. Historical values for the identified parameters are received, as indicated at block 136. A parameter forecast model is trained for each of the identified parameters, wherein each of the parameter forecast models is trained based at least in part on the received historical values for at least some of the identified parameters, as indicated at block 138. In some cases, each of the parameter forecast models may be trained based at least in part on the received historical values for at least some of the identified parameters of the industrial process and one or more of the forecasted parameter values.

A plurality of forecasted parameter values are predicted into the future for each of the identified parameters based at least in part on the corresponding parameter forecast model that corresponds to the respective parameter, as indicated at block 140. A plurality of forecasted steady state periods and a plurality of forecasted transient state periods are predicted for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period, as indicated at block 142. In some cases, predicting the plurality of forecasted steady state periods and the plurality of forecasted transient state periods for each of one or more of the identified parameters may include filtering each of the forecasted parameter values of the one or more identified parameters, resulting in respective filtered forecasted parameter values and predicting the plurality of forecasted steady state periods and the plurality of forecasted transient state periods for each of one or more of the identified parameters based at least in part on the filtered forecasted parameter values of the respective parameters.

In some instances, filtering each of the forecasted parameter values of the one or more identified parameters may include applying a significance filter to each of the forecasted parameter values of the one or more identified parameters to remove outliers. In some instances, filtering each of the forecasted parameter values of the one or more identified parameters may include applying a linear regression filter to each of the forecasted parameter values of the one or more identified parameters to remove additional outliers. In some instances, filtering each of the forecasted parameter values of the one or more identified parameters may include applying a gaussian estimator to each of the forecasted parameter values of the one or more identified parameters to remove additional outliers. In some cases, filtering each of the forecasted parameter values of the one or more identified parameters may include applying a peak threshold filter to each of the forecasted parameter values of the one or more identified parameters to remove additional outliers. In some instances, filtering each of the forecasted parameter values of the one or more identified parameters may include applying a significance filter to each of the forecasted parameter values of the one or more identified parameters, applying a linear regression filter to each of the forecasted parameter values of the one or more identified parameters, applying a gaussian estimator to each of the forecasted parameter values of the one or more identified parameters, and applying a peak threshold filter to each of the forecasted parameter values of the one or more identified parameters.

In some instances, when one or more of the forecasted transient state periods is unplanned or undesirable, the method 132 may include automatically adjusting one or more parameters of the industrial process to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods, as indicated at block 144. In some instances, the method 132 may include outputting a recommendation for adjusting one or more parameters of the industrial process to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods, as indicated at block 146.

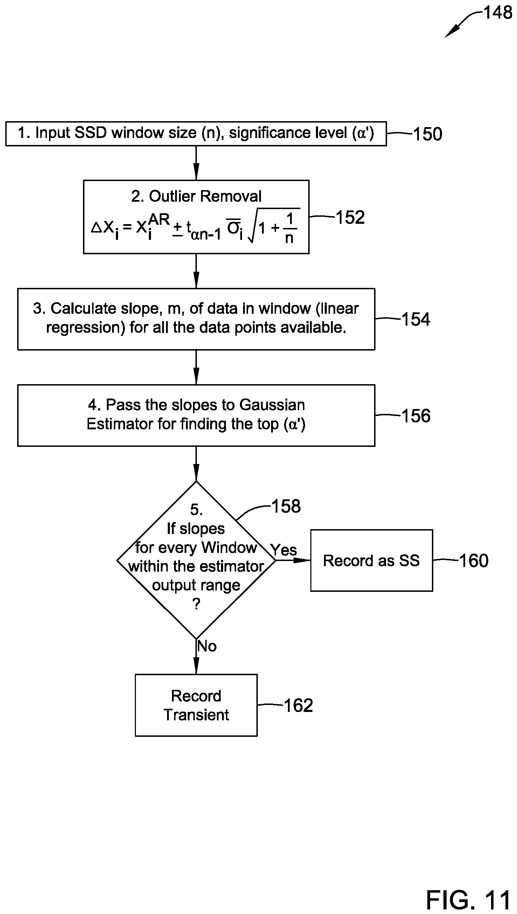

Figure 11 is a flow diagram showing an illustrative method 148 for detecting steady states and transient states. The illustrative method 148 is based on an assumption that all data includes both white noise (random fluxuations) and drifts (systematic changes), as indicated by:

$$x_i = \mu + m\Delta t_i + \epsilon_1.$$

The data may represent anything from sensor readings to financial transactions, for example.

The method 148 begins at block 150, where the SSD window size (n) and the significance level ($\alpha$) are

entered. Outlier removal occurs at block 150, sometimes in accordance with the equation:

$$\Delta x_i = x_i^{AR} \pm t_{\alpha,n-1}\overline{\sigma}_i \sqrt{1 + \frac{1}{n}}$$

where:

$\Delta x_i$ represents the change or difference in a variable x at a specific index i.

$x_i^{AR}$ refers to the average return (AR) of the variable x at index i. This may be considered as representing the expected or average change in x at that point.

$\pm t_{\alpha,n-1}\overline{\sigma}_i \sqrt{1 + \frac{1}{n}}$ can be broken down as follows:

$t_{\alpha,n-1}$ involves the t-distribution, and represents the critical value from the t-distribution with n-1 degrees of freedom at a significance level $\alpha$. This is used for constructing confidence intervals and for testing hypotheses.

$\overline{\sigma}_i$ is the sample standard deviation of the variable x at index i.

$\sqrt{1 + \frac{1}{n}}$ is a term accounting for the standard error, and is related to the variability of the sample mean. As the sample size n increases, the standard error decreases.

Putting it all together, the formula represents how the change in variable x at index i ($\Delta x_i$) is influenced by the average return ( $x_i^{AR}$ ) and the confidence interval around it. The confidence interval considers both the sample standard deviation ($\overline{\sigma}_i$) and the standard error ( $\sqrt{1 + \frac{1}{n}}$ ). The method 148 continues at block 154, where the data is passed through a linear regression filter. This filter calculates the slope of the data within a sliding window. If the slope is too steep or too flat, this may indicate an outlier. As an example, if the slope is unusually high or low, those data points may be flagged.

At block 156, a Gaussian estimator is applied to the slopes obtained from the linear regression filter. The Gaussian estimator identifies the peaks in the data. Peaks represent potential outliers. At block 158, a threshold is set for peak detection. If a peak exceeds the threshold, it is considered an outlier. Otherwise, its part of the normal data. As an example, a peak that is more than 3 standard deviations away from the mean will be labeled as an outlier. As an example, suppose the data concerns daily temperature data. If a sudden spike is observed in which the temperature jumps from 20 °C to 40 °C within an hour, this may be an outlier caused by a measurement error or an extreme weather event. If slopes are within range, control passes to block 160 where the data is recorded as indicating a steady state. If not, control passes to block 162 where the data is recorded as indicating a transient state.

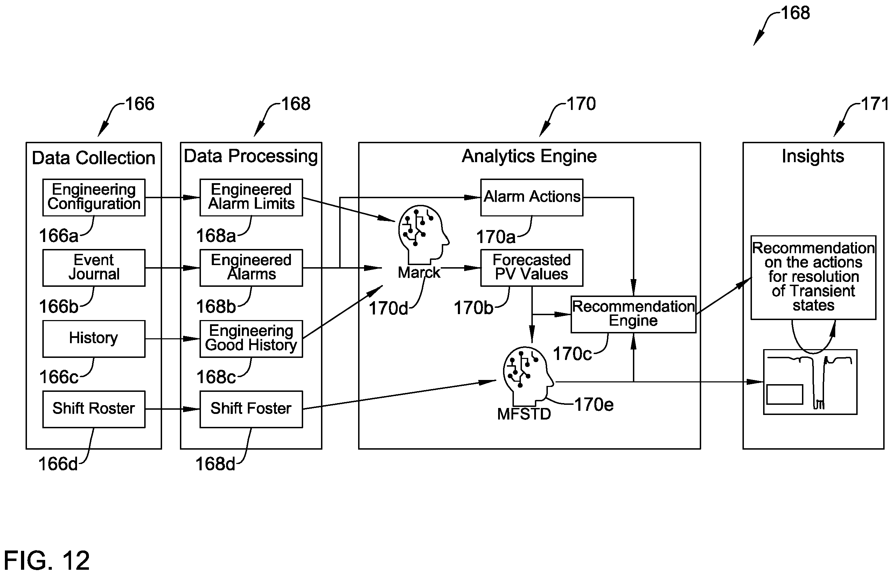

Figure 12 is a schematic view of an illustrative data pipeline 164 for detecting steady states and transient states. The data pipeline 164 includes data collection 166, data processing 168, an analytics engine 170 and insights 171. Data collection 166 includes engineering configuration 166a, event journal 166b, history 166c and shift roster 166d. Data processing 168 includes engineered alarm limits 168a, engineered alarms 168b, engineering good history 168c and shift roster 168d. Engineering configuration 166a communicates to engineered alarm limits 168a. Event journal 166b communicates with engineered alarms 168b. History 166c communicates with engineering good history 168c. Shift roster 166d communicates with shift roster 168d.

The analytics engine 170 includes alarm actions 170a, forecasted PV values 170b, a recommendation engine 170c, a MARCK (Multivariate Auto Regressive Combined KPI forecaster) 170d and a MFSTD 170e. Engineered alarm limits 168a communicates with the MARCK 170d. Engineered alarms 168b communicates with alarm actions 170a and with the MARCK 170d. Engineering good history 168c communicates with the MARCK 170d. Shift roster 168d communicates a defined window size with the MFSTD 170e. Alarm actions 170a communicates with recommendation engine 170c. The MARCK 170d communicates with forecasted PV values 170b, which in turns communicates with both recommendation engine 170c and with the MFSTD 170e.

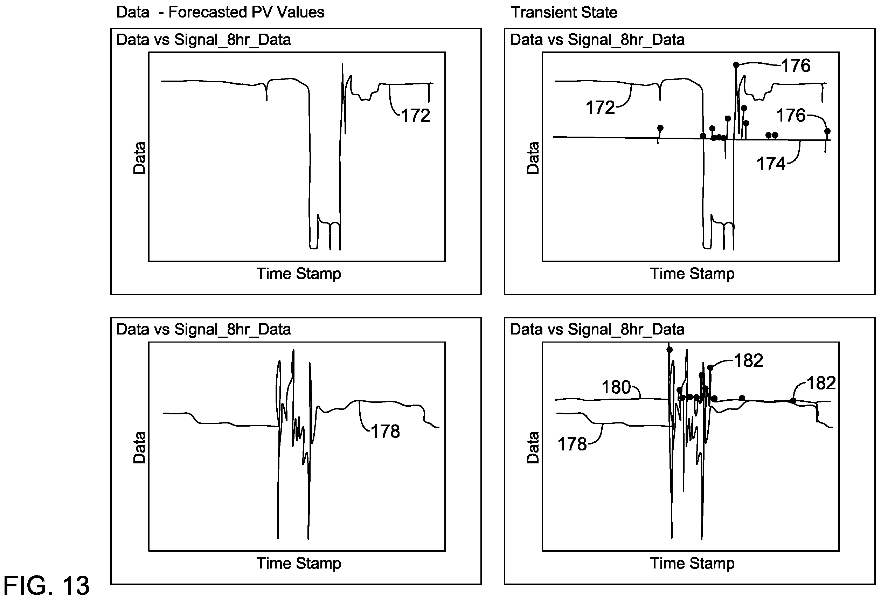

Figure 13 is a graphical representation of both transient and steady states. The upper left shows forecasted parameter values versus time for a first TAG and the lower left shows forecasted values versus time for a second TAG. The upper right shows graphed data 172 of the forecasted parameter values, a graphed line 174 indicating steady state, and a number of dots 176 indicating transient states for the first Tag. The lower right shows graphed data 178 of the forecasted parameter values, a graphed line 180 indicating steady state, and a number of dots 182 indicating transient states for the second Tag.

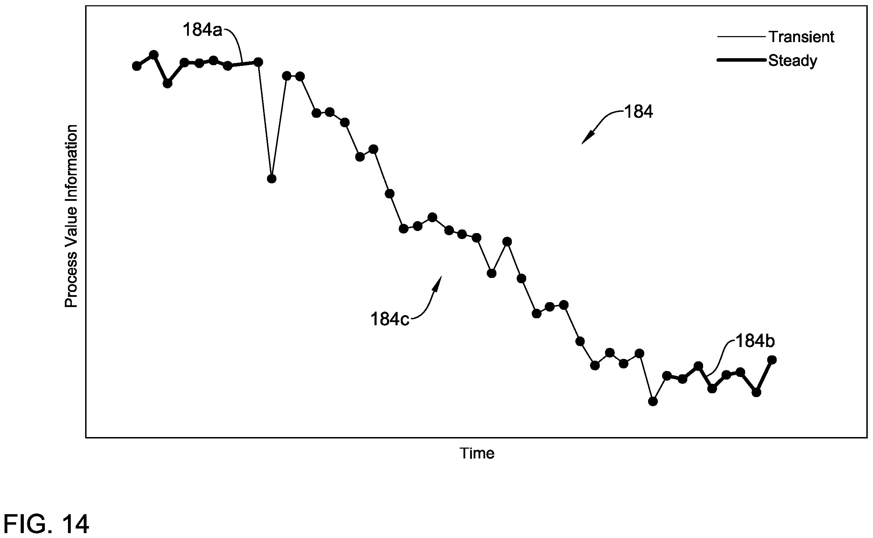

Figure 14 is a graphical representation of both transient and steady states, and includes a graph 184 showing forecasted parameter values (e.g. KPI) versus time. As can be seen, the graph 184 includes a first steady state 184a, a second steady state 184b, and a transient period 184c that occurs between the first steady state 184a and the second steady state 184b. The values shown in the second steady state 184b are lower than those shown in the first steady state 184a. The values steadily drop within the transient period 184c, but never stabilize sufficiently to be counted as another steady state. The first steady state 184a and the second steady state 184b may both be normal or acceptable steady states for the industrial process, such as going from producing 100 gallons of gasoline per hour to producing 80 gallons of gasoline per hour. However, being able to predict this steady state change in advance, and to predicted characteristics of the transition between the predicted steady states may help better manage the transition between the predicted steady states. In some cases, the controller 18 may be configured to automatically adjust one or more parameters of the industrial process 12 based at least in part on one or more of the forecasted transient state periods to eliminate one or more of the plurality of forecasted transient state periods, reduce a duration of one or more of the plurality of forecasted transient state periods and/or reduce a severity of one or more of the forecasted transient state periods. In some cases, the controller 18 may be configured to output a recommendation for adjusting one or more parameters of the industrial process 12 to eliminate one or more of the plurality of forecasted transient state periods, reduce a duration of one or more of the plurality of forecasted transient state periods and/or reduce a severity of one or more of the forecasted transient state periods.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for predicting steady states and transient states of predetermined parameters of an industrial process, the method comprising:

    identifying a plurality of parameters of the industrial process;
    receiving historical values for the identified parameters;
    training a parameter forecast model for each of the identified parameters, wherein each of the parameter forecast models is trained based at least in part on the received historical values for at least some of the identified parameters;
    predicting a plurality of forecasted parameter values into the future for each of the identified parameters based at least in part on the corresponding parameter forecast model that corresponds to the respective parameter; and
predicting a plurality of forecasted steady state periods and a plurality of forecasted transient state periods for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period.

2. The method of claim 1, further comprising:
when one or more of the forecasted transient state periods is determined to be unplanned or undesirable, automatically adjusting one or more parameters of the industrial process based at least in part on one or more of the forecasted transient state periods to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods.

3. The method of claim 1, further comprising:
when one or more of the forecasted transient state periods is determined to be unplanned or undesirable, outputting a recommendation for adjusting one or more parameters of the industrial process to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods.

4. The method of claim 1, wherein each of the parameter forecast models is trained based at least in part on the received historical values for at least some of the identified parameters of the industrial process and one or more of the forecasted parameter values.

5. The method of claim 1, wherein predicting the plurality of forecasted steady state periods and the plurality of forecasted transient state periods for each of one or more of the identified parameters comprises:

    filtering each of the forecasted parameter values of the one or more identified parameters, resulting in respective filtered forecasted parameter values; and
    predicting the plurality of forecasted steady state periods and the plurality of forecasted transient state periods for each of one or more of the identified parameters based at least in part on the filtered forecasted parameter values of the respective parameter.

6. The method of claim 5, wherein filtering each of the forecasted parameter values of the one or more identified parameters comprises applying a significance filter to each of the forecasted parameter values of the one or more identified parameters to remove outliers.

7. The method of claim 6, wherein filtering each of the forecasted parameter values of the one or more identified parameters comprises applying a linear regression filter to each of the forecasted parameter values of the one or more identified parameters to remove additional outliers.

8. The method of claim 6, wherein filtering each of the forecasted parameter values of the one or more identified parameters comprises applying a gaussian estimator to each of the forecasted parameter values of the one or more identified parameters to remove additional outliers.

9. The method of claim 6, wherein filtering each of the forecasted parameter values of the one or more identified parameters comprises applying a peak threshold filter to each of the forecasted parameter values of the one or more identified parameters to remove additional outliers.

10. The method of claim 5, wherein filtering each of the forecasted parameter values of the one or more identified parameters comprises:

applying a significance filter to each of the forecasted parameter values of the one or more identified parameters;
applying a linear regression filter to each of the forecasted parameter values of the one or more identified parameters;
applying a gaussian estimator to each of the forecasted parameter values of the one or more identified parameters; and
applying a peak threshold filter to each of the forecasted parameter values of the one or more identified parameters.

11. A system for predicting steady states and transient states of predetermined Key Performance Indicators (parameters) of an industrial process, the system comprising:

an I/O port;
a memory;
a controller operatively coupled to the I/O port and the memory, the controller configured to:

receive via the I/O port historical values for a plurality of identified parameters;
train a parameter forecast model for each of the identified parameters, wherein each of the parameter forecast models is trained based at least in part on the received historical values for at least some of the identified parameters;
predict a plurality of forecasted parameter values into the future for each of the identified parameters based at least in part on the corresponding parameter forecast model that corresponds to the respective parameter; and
predict a plurality of forecasted steady state periods and a plurality of forecasted transient state periods for each of one or more of the identified parameters based at least in part on the forecasted parameter values of the respective parameter, wherein each of the plurality of forecasted transient state periods corresponds to a period of time when the respective forecasted parameter value is predicted to transition from one forecasted steady state period to another forecasted steady state period.

12. The system of claim 11, wherein the controller is configured to:

determine when one or more of the forecasted transient state periods is unplanned or undesirable; and
automatically adjust one or more parameters of the industrial process based at least in part on one or more of the forecasted transient state periods to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods.

13. The system of claim 11, wherein the controller is configured to:

determine when one or more of the forecasted transient state periods is unplanned or undesirable; and
output a recommendation for adjusting one or more parameters of the industrial process to eliminate one or more of the unplanned or undesirable forecasted transient state periods, reduce a duration of one or more of the unplanned or undesirable forecasted transient state periods and/or reduce a severity of one or more of the unplanned or undesirable forecasted transient state periods.

14. The system of claim 11, wherein when predicting the plurality of forecasted steady state periods and the plurality of forecasted transient state periods for each of one or more of the identified parameters, the controller is configured to:

filter each of the forecasted parameter values of the one or more identified parameters, resulting in respective filtered forecasted parameter values; and

predict the plurality of forecasted steady state periods and the plurality of forecasted transient state periods for each of one or more of the identified parameters based at least in part on the filtered forecasted parameter values of the respective parameter.

15. The system of claim 14, wherein when filtering each of the forecasted parameter values of the one or more identified parameters, the controller is configured to apply two or more of:

a significance filter to each of the forecasted parameter values of the one or more identified parameters;

a linear regression filter to each of the forecasted parameter values of the one or more identified parameters;

a gaussian estimator to each of the forecasted parameter values of the one or more identified parameters; and

a peak threshold filter to each of the forecasted parameter values of the one or more identified parameters.

FIG. 1

26

```
┌─────────────────────────────────────────┐
│ receiving a plurality of tags that each identify │──28
│ a corresponding KPI of the industrial process │
└─────────────────────────────────────────┘
                    │
                    ▼
┌─────────────────────────────────────────┐
│ receiving historical values for the KPIs │──30
│ that are identified by the plurality of tags │
└─────────────────────────────────────────┘
                    │
                    ▼
┌─────────────────────────────────────────────────────┐
│ training a KPI forecast model for each of the KPIs that are identified │
│ by the plurality of tags, wherein each of the KPI forecast models is │──32
│ trained based at least in part on the received historical values for at │
│ least some of the KPIs that are identified by the plurality of tags │
└─────────────────────────────────────────────────────┘
                    │
                    ▼
┌─────────────────────────────────────────────────────┐
│ generating a forecasted KPI value for each of the KPIs identified │
│ by the plurality of tags based at least in part on the corresponding │──34
│ KPI forecast model that corresponds to the respective KPI │
└─────────────────────────────────────────────────────┘
                    │
                    ▼
┌─────────────────────────────────────────────────────┐
│ automatically adjusting one or more parameters of the industrial process │
│ based at least in part on one or more of the forecasted KPI values │──36
└─────────────────────────────────────────────────────┘
```

FIG. 2

38

receiving a plurality of tags that each identify
a corresponding KPI of the industrial process — 40

receiving historical values for the KPIs
that are identified by the plurality of tags — 42

training a KPI forecast model for each of the KPIs that are identified
by the plurality of tags, wherein each of the KPI forecast models is
trained based at least in part on the received historical values for at
least some of the KPIs that are identified by the plurality of tags — 44

receiving a time to forecast value — 46

generating the forecasted KPI value for each of the KPIs identified by the
plurality of tags includes generating the forecasted KPI value for each of
the KPIs identified by at least some of the plurality of tags forecasted at
a time in the future that corresponds to the time to forecast value — 48

FIG. 3

~50

receiving a plurality of tags that each identify a corresponding KPI of the industrial process —52

receiving historical values for the KPIs that are identified by the plurality of tags —54

training a plant state forecast model for each of the plurality of plants, wherein each of the plant state forecast models is trained to forecast the plant state of the respective plant based at least in part on the received historical values for the KPIs that are associated with the respective plant —56

generating a forecasted plant state for at least one of the plurality of plants of the industrial process based at least in part on the plant state forecast model that corresponds to the respective plant —58

receiving one or more alarm limits for at least some of the KPIs associated with each of the plurality of plants —60

training each of the plant state forecast models to forecast the plant state of the respective plant based at least in part on the received historical values for the KPIs that are associated with the respective plant and one or more alarm limits for at least some of the KPIs associated with the respective plant —62

FIG. 4

64

```
┌─────────────────────────────────────────┐
│ receiving a plurality of tags that each identify │──66
│ a corresponding KPI of the industrial process    │
└─────────────────────────────────────────┘
                    │
                    ▼
     ┌─────────────────────────────────┐
     │ receiving historical values for the KPIs │──68
     │ that are identified by the plurality of tags │
     └─────────────────────────────────┘
                    │
                    ▼
  ┌───────────────────────────────────────────┐
  │ training a KPI forecast model for each of the KPIs that │
  │ are identified by the plurality of tags, wherein each of │
  │ the KPI forecast models is trained based at least in │──70
  │ part on the received historical values for at least some │
  │ of the KPIs that are identified by the plurality of tags │
  └───────────────────────────────────────────┘
                    │
                    ▼
┌───────────────────────────────────────────────┐
│ generating a forecasted KPI value for each of the KPIs identified │
│ by the plurality of tags based at least in part on the corresponding │──72
│ KPI forecast model that corresponds to the respective KPI │
└───────────────────────────────────────────────┘
                    │
                    ▼
     ┌──────────────────────────────────┐
     │ receiving one or more alarm limits for at least │──74
     │ some of the KPIs of the industrial process │
     └──────────────────────────────────┘
                    │
                    ▼
   ┌─────────────────────────────────────┐
   │ receiving historical alarms and/or events associated │──76
   │ with at least some of the KPIs of the industrial process │
   └─────────────────────────────────────┘
                    │
                    ▼
              To FIG. 5B
```

FIG. 5A

64

From FIG. 5A

training an alarm forecast model for one or more of the KPIs of the industrial process, wherein the alarm forecast model is trained based on the received historical values for one or more of the KPIs, the historical alarms and/or events associated with at least some of the KPIs, and one or more of the alarm limits for at least some of the KPIs ─78

generating a forecasted alarm for each of one or more of the KPI's based the forecasted KPI value for the respective PKI. ─80

identifying one or more of the historical alarms and/or events that overlap in time, resulting in one or more overlapping episodes ─82

excluding the historical alarms and/or events that overlap in time during the one or more overlapping episodes ─84

wherein the alarm forecast model is trained based on the received historical values for one or more of the KPIs, the historical alarms and/or events for at least some of the KPIs excluding at least some of the historical alarms and/or events that overlap in time during the one or more overlapping episodes, and one or more of the alarm limits for at least some of the KPIs ─86

FIG. 5B

FIG. 6

FIG. 7

FIG. 8

FIG. 9

132

identifying a plurality of KPI of the industrial process —134

receiving historical values for the identified KPIs —136

training a KPI forecast model for each of the identified KPIs, wherein each of the KPI forecast models is trained based at least in part on the received historical values for at least some of the identified KPIs —138

predicting a plurality of forecasted KPI values into the future for each of the identified KPIs based at least in part on the corresponding KPI forecast model that corresponds to the respective KPI —140

predicting a plurality of forecasted steady state periods and a plurality of forecasted transient state periods for each of one or more of the identified KPIs based at least in part on the forecasted KPI values of the respective KPI, wherein each of the plurality of forecasted transient state periods corresponds to a period of time when the respective forecasted KPI value is predicted to transition from one forecasted steady state period to another forecasted steady state period —142

automatically adjusting one or more parameters of the industrial process based at least in part on one or more of the forecasted transient state periods to eliminate one or more of the plurality of forecasted transient state periods, reduce a duration of one or more of the plurality of forecasted transient state periods and/or reduce a severity of one or more of the forecasted transient state periods —144

outputting a recommendation for adjusting one or more parameters of the industrial process to eliminate one or more of the plurality of forecasted transient state periods, reduce a duration of one or more of the plurality of forecasted transient state periods and/or reduce a severity of one or more of the forecasted transient state periods —146

FIG. 10

148

1. Input SSD window size (n), significance level (α') ──150

2. Outlier Removal

$$\Delta X_i = X_i^{AR} \pm t_{\alpha n-1} \, \overline{\sigma}_i \sqrt{1 + \frac{1}{n}}$$

──152

3. Calculate slope, m, of data in window (linear regression) for all the data points available. ──154

4. Pass the slopes to Gaussian Estimator for finding the top (α') ──156

5.
If slopes for every Window within the estimator output range ? ──158

Yes → Record as SS ──160

No

Record Transient ──162

FIG. 11

EP 4 592 770 A1

FIG. 12

FIG. 13

FIG. 14

Europäisches Patentamt
European Patent Office
Office européen des brevets

# EUROPEAN SEARCH REPORT

**Application Number**

EP 25 15 0796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/299862 A1 (ZHAO HONG [US] ET AL) 18 October 2018 (2018-10-18) * the whole document * | 1-15 | INV. G05B13/02 |
| X | US 2022/308573 A1 (RANGANATHAN SATHYANARAYANA BHARADWAJ [IN]) 29 September 2022 (2022-09-29) * the whole document * | 1,11 | |
| X | US 2022/282839 A1 (WILSON ZACHARY S [US] ET AL) 8 September 2022 (2022-09-08) * the whole document * | 1,11 | |
| X | KR 2021 0077124 A (KOREA ELECTRIC POWER CORP [KR]) 25 June 2021 (2021-06-25) * the whole document * | 1,11 | |

**TECHNICAL FIELDS SEARCHED (IPC)**

G05B

The present search report has been drawn up for all claims

| Place of search | Date of completion of the search | Examiner |
|---|---|---|
| The Hague | 18 June 2025 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 25 15 0796

This annex lists the patent family members relating to the patent documents cited in  the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | | Publication date |
|---|---|---|---|---|
| US 2018299862    A1 | 18-10-2018 | EP | 3289420 A1 | 07-03-2018 |
| | | US | 2016320768 A1 | 03-11-2016 |
| | | US | 2018299862 A1 | 18-10-2018 |
| | | WO | 2016178955 A1 | 10-11-2016 |
| US 2022308573    A1 | 29-09-2022 | EP | 4068551 A1 | 05-10-2022 |
| | | US | 2022308573 A1 | 29-09-2022 |
| US 2022282839    A1 | 08-09-2022 | CA | 3149471 A1 | 05-09-2022 |
| | | CN | 115016552 A | 06-09-2022 |
| | | DE 102022104963 A1 | | 08-09-2022 |
| | | US | 2022282839 A1 | 08-09-2022 |
| KR 20210077124  A | 25-06-2021 | NONE | | |

EPO FORM P0459

For more details about this annex : see Official Journal of the European Patent Office, No. 12/82